(19) Europäisches Patentamt
European Patent Office
Office européen des brevets

(11) EP 4 431 542 A1

(12) EUROPEAN PATENT APPLICATION
published in accordance with Art. 153(4) EPC

(43) Date of publication:
18.09.2024 Bulletin 2024/38

(21) Application number: 22892839.6

(22) Date of filing: 10.11.2022

(51) International Patent Classification (IPC):
*C08G 63/64* (2006.01) *G02B 1/04* (2006.01)

(52) Cooperative Patent Classification (CPC):
C08G 63/64; G02B 1/04

(86) International application number:
PCT/JP2022/041832

(87) International publication number:
WO 2023/085341 (19.05.2023 Gazette 2023/20)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 12.11.2021 JP 2021184826

(71) Applicant: MITSUBISHI GAS CHEMICAL COMPANY, INC.
Chiyoda-ku
Tokyo 100-8324 (JP)

(72) Inventors:
- KATO Noriyuki
Tokyo 100-8324 (JP)
- NISHIMORI Katsushi
Tokyo 125-8601 (JP)
- MOTEGI Atsushi
Tokyo 125-8601 (JP)
- ISHIHARA Kentaro
Tokyo 100-8324 (JP)
- MURATA SUZUKI Shoko
Tokyo 125-8601 (JP)
- WATANABE Takafumi
Tokyo 125-8601 (JP)
- ARAI Yuta
Tokyo 125-8601 (JP)
- HARADA Yutaro
Tokyo 125-8601 (JP)

(74) Representative: Hoffmann Eitle
Patent- und Rechtsanwälte PartmbB
Arabellastraße 30
81925 München (DE)

# (54) POLYESTER CARBONATE RESIN, AND OPTICAL LENS AND OPTICAL FILM WHICH USE SAME

(57) According to the present invention, there can be provided a polyester carbonate resin, comprising a constituent unit (A) represented by the following general formula (1), a constituent unit (B) represented by the following general formula (2), and a constituent unit (i) derived from a dicarboxylic acid or a carboxylic acid diester represented by the following general formula (I).

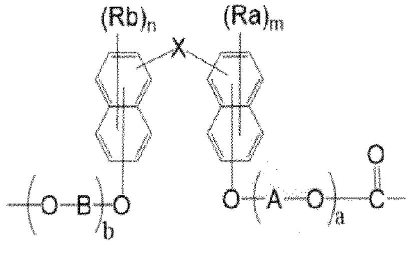

(1)

In the above formula (1), X represents a single bond or a fluorene group; when X is a single bond, $R_a$ and $R_b$ each independently represent a halogen atom or the like; when X is a fluorene group, $R_a$ and $R_b$ each independently represent a hydrogen atom or the like; A and B each independently represent an alkylene group containing 1 to 4 carbon atoms; m and n each independently represent an integer of 1 to 6; and a and b each independently represent an integer of 0 to 10.

EP 4 431 542 A1

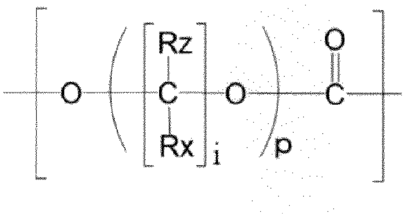

(2)

In the above formula (2), $R_z$ and $R_x$ each independently represent a hydrogen atom, or an alkyl group containing 1 to 3 carbon atoms, i represents an integer of 2 to 16, and p represents an integer of 1 to 600.

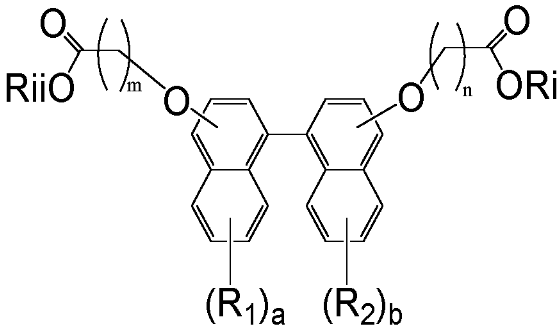

(I)

In the above formula (I), $R_1$ and $R_2$ each independently represent a hydrogen atom or the like, a and b each independently represent an integer of 0 to 5, n and m each independently represent an integer of 1 to 5, and $R_i$ and $R_{ii}$ each independently represent a hydrogen atom, or an alkyl group containing 1 to 5 carbon atoms.

## Description

### Technical Field

The present invention relates to a novel polyester carbonate resin, and an optical lens and an optical film, which are formed from the polyester carbonate resin.

### Background Art

As materials for optical elements used in the optical systems of various types of cameras such as a camera, a film-integrated camera and a video camera, optical glasses or optical transparent resins have been used. Such optical glasses are excellent in heat resistance, transparency, dimensional stability, chemical resistance and the like, and many types of materials having various refractive indexes (nD) and Abbe numbers (vD) are present. However, the optical glasses are problematic in terms of high material costs, poor formability and low productivity. In particular, the processing of such an optical glass into an aspherical lens used for aberration correction is a major practical obstacle because of the extremely high technology and high costs involved.

On the other hand, an optical lens consisting of an optical transparent resin, in particular, a thermoplastic transparent resin, is advantageous in that it can be produced in a large amount by injection molding and in that the production of an aspherical lens is easy. At present, the optical lens is used as a lens for cameras. Examples thereof may include polycarbonate consisting of bisphenol A, polystyrene, poly-4-methylpentene, polymethyl methacrylate, and amorphous polyolefin.

However, when such an optical transparent resin is used as an optical lens, the used optical transparent resin is required to have transparency, heat resistance and low birefringence, in addition to refractive index and Abbe number. Thus, the optical transparent resin is disadvantageous in that its location of use is limited by the balance of the properties of the resin. For example, polystyrene has low heat resistance and large birefringence; poly-4-methylpentene has low heat resistance; polymethyl methacrylate has low glass transition temperature, low heat resistance, and small refractive index. Therefore, the application areas of these substances are limited, and further, since polycarbonate consisting of bisphenol A is disadvantageous in terms of high birefringence, its location of use is unfavorably limited.

Meanwhile, in general, when the refractive index of an optical material is high, a lens element with the same refractive index can be realized on a surface with smaller curvature, thereby enabling a reduction in the amount of aberration generated on this surface, and it makes possible to reduce the number of lenses, to reduce the eccentricity sensitivity of lenses, and to reduce the thickness of a lens thereby reducing the size and weight of the lens. Hence, an optical material having a high refractive index is useful.

Moreover, in the optical designing of optical units, it has been known that chromatic aberration is corrected by using a plurality of lenses having different Abbe numbers in combination with one another. For example, a lens made of alicyclic polyolefin resin having an Abbe number of 45 to 60 is combined with a lens made of polycarbonate (nD=1.59, vD=29) resin consisting of bisphenol A having a low Abbe number, and the chromatic aberration is corrected by the combined lenses.

Among the optical transparent resins that have been commercialized for optical lens applications, those having high Abbe numbers are polymethyl methacrylate (PMMA), a cycloolefin polymer, and the like. In particular, the cycloolefin polymer has been widely used for optical lens applications because it has excellent heat resistance and excellent mechanical properties.

Resins having low Abbe number include polyester and polycarbonate. For example, the resin disclosed in Patent Literature 1 is characterized by high refractive index and low Abbe number.

There is a difference in water-absorption expansion coefficient between a cycloolefin polymer having high Abbe number and a polycarbonate resin that is a polymer having low Abbe number. When a lens unit is formed by combining the lenses of the aforementioned materials, a difference in the size of the lens occurs when the lens absorbs water in the use environment of a smartphone or other devices. This difference in expansion coefficient causes the performance of the lens to be impaired.

Patent Literatures 2 to 4 disclose a polycarbonate copolymer containing a perhydroxydimethanonaphthalene skeleton. However, since the dihydroxymethyl groups are located at positions 2 and 3, this copolymer has low intensity, and thus, it is unsuitable for optical lens applications. Furthermore, the polycarbonate disclosed in Patent Literatures 2 to 4 is problematic in terms of heat resistance, since it has a low glass transition temperature (Tg). For example, the HOMO polycarbonate described in Example 1 of Patent Literature 4 has a low glass transition temperature (Tg) of 125°C, even though its number average molecular weight is 38000.

Citation List

Patent Literature

Patent Literature 1: International Publication WO2014/73496
Patent Literature 2: JP Patent Publication (Kokai) No. H5-70584 A (1993)
Patent Literature 3: JP Patent Publication (Kokai) No. H2-69520 A (1990)
Patent Literature 4: JP Patent Publication (Kokai) No. H5-341124 A (1993)

Summary of Invention

Technical Problem

It is an object of the present invention to solve at least one of the aforementioned problems of the prior art techniques. In addition, in a preferred aspect of the present invention, it is another object of the present invention to provide a polyester carbonate resin that is excellent in terms of at least one of refractive index, Abbe number, glass transition temperature, dispersion degree, and melt volume-flow rate. Moreover, it is a further object of the present invention to provide an optical lens and an optical film, which are produced from the aforementioned resin.

Solution to Problem

As a result of intensive studies directed towards achieving the aforementioned objects, the present inventors have found that the aforementioned objects can be achieved with a polyester carbonate resin having, as a raw material, a combination of specific diol compounds, thereby completing the present invention.
Specifically, the present invention is as follows.

< 1 > A polyester carbonate resin which comprises a constituent unit (A) represented by the following general formula (1), a constituent unit (B) represented by the following general formula (2), and a constituent unit (i) derived from a dicarboxylic acid or a carboxylic acid diester represented by the following general formula (I):

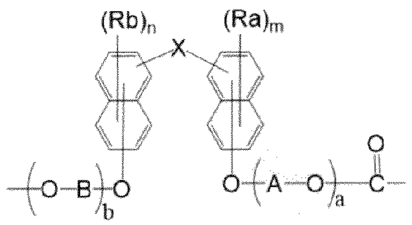
(1)

wherein

X represents a single bond or a fluorene group,
when X is a single bond, $R_a$ and $R_b$ are each independently selected from a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms or an aryloxy group containing 6 to 20 carbon atoms, which comprises one or more heterocyclic atoms selected from O, N and S, and $-C \equiv C-R_h$,
when X is a fluorene group, $R_a$ and $R_b$ are each independently selected from a hydrogen atom, a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms or an aryloxy group containing 6 to 20 carbon atoms, which comprises one or more heterocyclic atoms selected from O, N and S, and $-C \equiv C-R_h$,
$R_h$ represents an aryl group containing 6 to 20 carbon atoms, or a heteroaryl group containing 6 to 20 carbon atoms, which comprises one or more heterocyclic atoms selected from O, N and S,
A and B each independently represent an alkylene group containing 1 to 4 carbon atoms,

m and n each independently represent an integer of 1 to 6, and
a and b each independently represent an integer of 0 to 10,

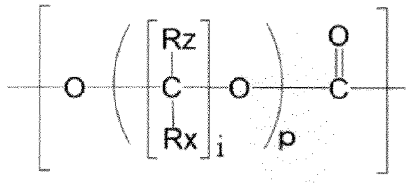

(2)

wherein

$R_z$ and $R_x$ each independently represent a hydrogen atom, or an alkyl group containing 1 to 3 carbon atoms, i represents an integer of 2 to 16, and p represents an integer of 1 to 600, and

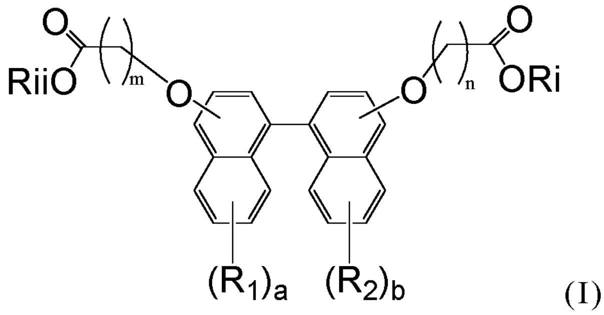

(I)

wherein

$R_1$ and $R_2$ each independently represent a hydrogen atom, a fluorine atom, a chlorine atom, a bromine atom, an iodine atom, an alkyl group containing 1 to 6 carbon atoms, or an aryl group containing 6 to 20 carbon atoms, which optionally comprises a heterocyclic atom selected from O, N and S, an alkenyl group containing 2 to 6 carbon atoms, an alkoxy group containing 1 to 6 carbon atoms, or an aralkyl group containing 7 to 17 carbon atoms,
a and b each independently represent an integer of 0 to 5,
n and m each independently represent an integer of 1 to 5, and
$R_i$ and $R_{ii}$ each independently represent a hydrogen atom, or an alkyl group containing 1 to 5 carbon atoms.

< 2 > The polyester carbonate resin according to the above < 1 >, wherein the molar ratio (A/B) between the constituent unit (A) and the constituent unit (B) is 99.9/0.1 to 0.1/99.9.
< 3 > The polyester carbonate resin according to the above < 1 > or < 2 >, wherein i in the general formula (2) is an integer of 2 to 10, and p in the general formula (2) is 1 to 3.
< 4 > The polyester carbonate resin according to any one of the above < 1 > to < 3 >, which further comprises a constituent unit (C) represented by the following general formula (3):

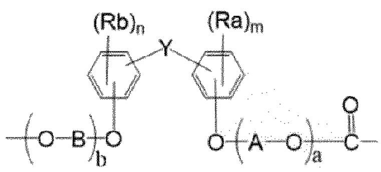

(3)

wherein

$R_a$ and $R_b$ each independently represent a halogen atom, an alkyl group containing 1 to 20 carbon atoms, an alkoxyl group containing 1 to 20 carbon atoms, a cycloalkyl group containing 5 to 20 carbon atoms, a cycloalkoxyl

group containing 5 to 20 carbon atoms, or an aryl group containing 6 to 20 carbon atoms,
Y represents -O-, -S-, -SO-, $-SO_2-$, -CO-, a cycloalkylene group containing 6 to 12 carbon atoms, or a divalent group represented by the following general formula (4) or the following general formula (5), wherein the cycloalkylene group may be optionally substituted with 1 to 12 alkyl groups containing 1 to 3 carbon atoms,
A and B each independently represent an alkylene group containing 1 to 4 carbon atoms,
m and n each independently represent an integer of 0 to 4, and
a and b each independently represent an integer of 1 to 10,

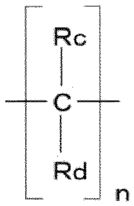
(4)

wherein
$R_c$ and $R_d$ are each independently selected from the group consisting of a hydrogen atom, a halogen atom, an alkyl group containing 1 to 20 carbon atoms, an alkoxy group containing 1 to 5 carbon atoms, an aryl group containing 6 to 12 carbon atoms, an aralkyl group containing 7 to 17 carbon atoms, and an alkenyl group containing 2 to 15 carbon atoms,
wherein the alkyl group, the alkoxy group, the aryl group, the aralkyl group, and the alkenyl group in $R_c$ and $R_d$ may each optionally have a substituent, and $R_c$ and $R_d$ may bind to each other to form a carbon ring containing 3 to 20 carbon atoms or a heteroring containing 1 to 20 carbon atoms, the carbon ring and the heteroring may each optionally have a substituent, and n represents an integer of 0 to 20,

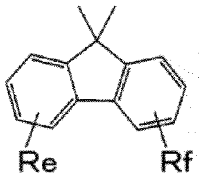
(5)

wherein

$R_e$ and $R_f$ are each independently selected from the group consisting of a hydrogen atom, a halogen atom, an alkyl group containing 1 to 20 carbon atoms, an alkoxy group containing 1 to 7 carbon atoms, an aryl group containing 6 to 12 carbon atoms, an aralkyl group containing 7 to 17 carbon atoms, and an alkenyl group containing 2 to 15 carbon atoms, wherein the alkyl group, the alkoxy group, the aryl group, the aralkyl group, and the alkenyl group may each optionally have a substituent, and
$R_e$ and $R_f$ may bind to each other to form a carbon ring containing 3 to 20 carbon atoms or a heteroring containing 1 to 20 carbon atoms, and the carbon ring and the heteroring may each optionally have a substituent.

< 5 > The polyester carbonate resin according to the above < 4 >, wherein Y in the general formula (3) is a fluorene group.
< 6 > The polyester carbonate resin according to any one of the above < 1 > to < 5 >, which further comprises a constituent unit (D) represented by the following general formula (6):

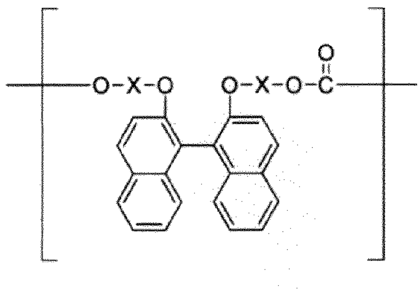

(6)

wherein X represents an alkylene group containing 1 to 4 carbon atoms.

< 7 > The polyester carbonate resin according to any one of the above < 1 > to < 6 >, wherein the monomer constituting the constituent unit (A) represented by the general formula (1) comprises at least one of monomers represented by the following structural formulae:

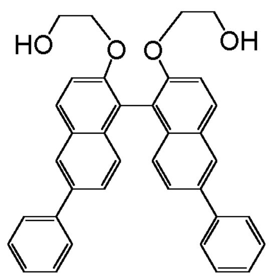

DPBHBNA

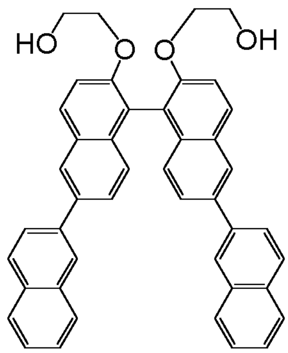

2DNBINOL-2EO

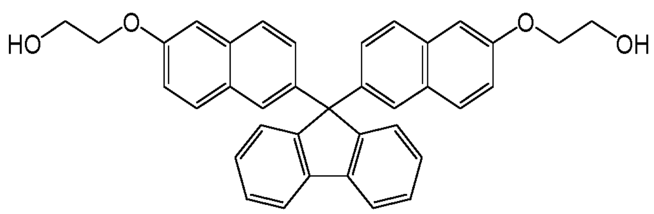

BNEF

< 8 > The polyester carbonate resin according to any one of the above < 1 > to < 7 >, wherein the monomer constituting the constituent unit (B) represented by the general formula (2) is at least one compound selected from the group consisting of 1,5-pentanediol, 1,6-hexanediol, 1,7-heptanediol, 1,8-octanediol, 1,10-decanediol, and 1,12-dodecanediol (C12-diol).

< 9 > The polyester carbonate resin according to any one of the above < 1 > to < 8 >, wherein the dicarboxylic acid or the carboxylic acid diester represented by the general formula (I) comprises at least either a dicarboxylic acid or a carboxylic acid diester represented by the following structural formulae:

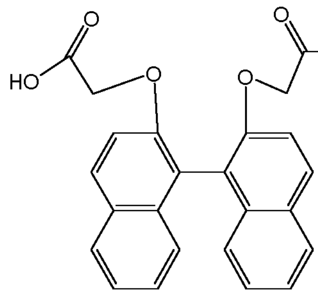

BINOL-DC

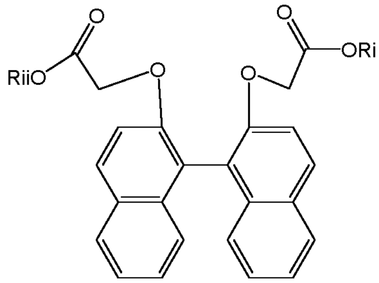

wherein $R_i$ and $R_{ii}$ each independently represent an alkyl group containing 1 to 5 carbon atoms.

< 10 > The polyester carbonate resin according to the above < 4 > or < 5 >, wherein the monomer constituting the constituent unit (C) represented by the general formula (3) comprises at least one of monomers represented by the following structural formulae:

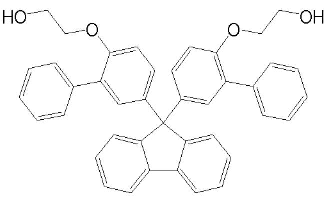

BPPEF

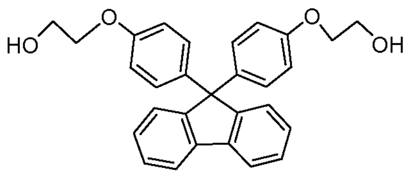

BPEF

< 11 > The polyester carbonate resin according to the above < 6 >, wherein the monomer constituting the unit (D) represented by the general formula (6) is a monomer represented by the following structural formula:

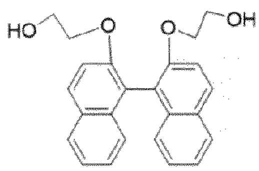

BNE

< 12 > The polyester carbonate resin according to any one of the above < 1 > to < 11 >, which has a refractive index (nD) of 1.693 to 1.710.

< 13 > The polyester carbonate resin according to any one of the above < 1 > to < 12 >, which has Tg of 145°C to 161°C.

< 14 > The polyester carbonate resin according to any one of the above < 1 > to < 13 >, which has a dispersion degree (Mw/Mn) of 2.0 to 8.0.

< 15 > The polyester carbonate resin according to any one of the above < 1 > to < 14 >, which has a melt volume-flow rate ($cm^3$/10 min) of 9.0 to 100.

< 16 > An optical lens, comprising the polyester carbonate resin according to any one of the above < 1 > to < 15 >.

< 17 > An optical film, comprising the polyester carbonate resin according to any one of the above < 1 > to < 15 >.

Advantageous Effects of Invention

According to a preferred aspect of the present invention, there is obtained a polyester carbonate resin that is excellent in terms of at least one of refractive index, Abbe number, glass transition temperature, dispersion degree, and melt volume-flow rate. Further, an optical lens and an optical film, which are produced from the aforementioned resin, are obtained.

Description of Embodiments

(A) Polyester carbonate resin

The polyester carbonate resin of the present invention comprises a constituent unit (A) represented by the following general formula (1), a constituent unit (B) represented by the following general formula (2), and a constituent unit (i) derived from a dicarboxylic acid or a carboxylic acid diester represented by the following general formula (I). In one embodiment of the present invention, the polyester carbonate resin may comprise each one of the constituent units represented by the general formula (1) and the general formula (2) alone, or may also comprise two or more types of the constituent units represented by the general formula (1) and the general formula (2) in combination.

< Constituent unit (A) >

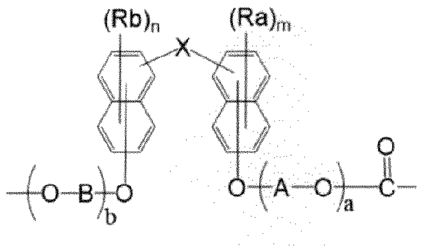

(1)

In the above formula (1),

X represents a single bond or a fluorene group,
when X is a single bond, $R_a$ and $R_b$ are each independently selected from a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms or an aryloxy group containing 6 to 20 carbon atoms, which comprises one or more heterocyclic atoms selected from O, N and S, and $-C\equiv C-R_h$,
when X is a fluorene group, $R_a$ and $R_b$ are each independently selected from a hydrogen atom, a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms or an aryloxy group containing 6 to 20 carbon atoms, which comprises one or more heterocyclic atoms selected from O, N and S, and $-C\equiv C-R_h$,
$R_h$ represents an aryl group containing 6 to 20 carbon atoms, or a heteroaryl group containing 6 to 20 carbon atoms, which comprises one or more heterocyclic atoms selected from O, N and S,
A and B each independently represent an alkylene group containing 1 to 4 carbon atoms,
m and n each independently represent an integer of 1 to 6, and
a and b each independently represent an integer of 0 to 10.

In a preferred embodiment of the present invention, in the formula (1), $R_a$ and $R_b$ are each independently selected from an aryl group containing 6 to 20 carbon atoms, a heteroaryl group containing 6 to 20 carbon atoms or an aryloxy group containing 6 to 20 carbon atoms, which comprises one or more heterocyclic atoms selected from O, N and S, and $-C\equiv C-R_h$, wherein $R_h$ represents an aryl group containing 6 to 20 carbon atoms, or a heteroaryl group containing 6 to 20 carbon atoms, which comprises one or more heterocyclic atoms selected from O, N and S.

The aryl group contains more preferably 6 to 18 carbon atoms, even more preferably 6 to 16 carbon atoms,

further preferably 6 to 14 carbon atoms, even further preferably 6 to 12 carbon atoms, and still further preferably 6 to 10 carbon atoms.

The heteroaryl group contains more preferably 6 to 18 carbon atoms, even more preferably 8 to 16 carbon atoms, and further preferably 10 to 14 carbon atoms.

The aryloxy group contains more preferably 6 to 18 carbon atoms, even more preferably 6 to 16 carbon atoms, and further preferably 6 to 14 carbon atoms.

Moreover, in a preferred embodiment of the present invention, in the formula (1), when X is a single bond, $R_a$ and $R_b$ may be each independently selected from a phenyl group, a naphthyl group, and a group consisting of the following; when X is a fluorene group, $R_a$ and $R_b$ may be each independently selected from a hydrogen atom, a phenyl group, a naphthyl group, and a group consisting of the following:

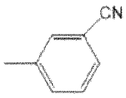 , 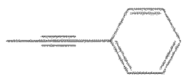 , 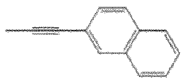 , 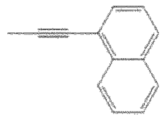

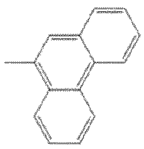 , 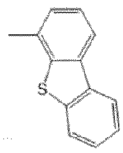 , 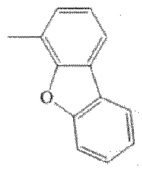

In the present invention, an aspect, in which the monomer constituting the constituent unit (A) represented by the above general formula (1) includes at least one of monomers represented by the following structural formulae, is preferable:

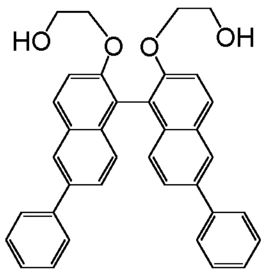

DPBHBNA

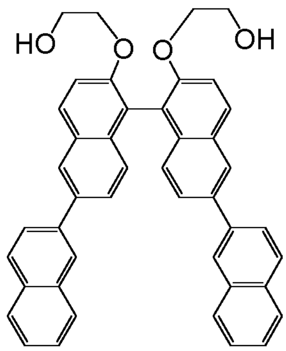

2DNBINOL-2EO

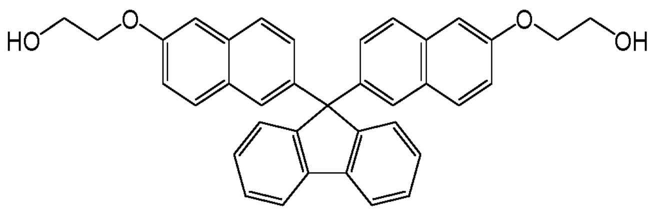

BNEF

< Constituent unit (B) >

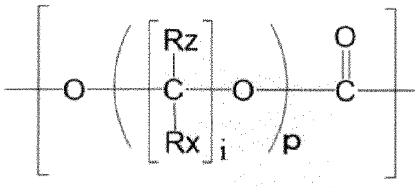

(2)

In the formula (2), $R_z$ and $R_x$ each independently represent a hydrogen atom, or an alkyl group containing 1 to 3 carbon atoms, i represents an integer of 2 to 16, and p represents an integer of 1 to 600.

In a preferred embodiment of the present invention, in the formula (2), i is an integer of 2 to 14, 2 to 12, 2 to 10, 2 to 8, 2 to 6, 2 to 4, 4 to 16, 4 to 14, 4 to 12, 4 to 10, 4 to 8, 4 to 6, 6 to 16, 6 to 14, 6 to 12, 6 to 10, or 6 to 8; and p is an integer of 1 to 500, 1 to 400, 1 to 300, 1 to 200, 1 to 100, 1 to 50, 1 to 40, 1 to 30, 1 to 20, 1 to 15, 1 to 10, 1 to 8, 1 to 6, 1 to 4, 1 to 3, or 2 or 3.

Moreover, preferred examples of the aliphatic dihydroxy compound that is related to the constituent unit (B) represented by the formula (2) may include ethylene glycol, diethylene glycol, triethylene glycol, 1,3-propanediol, 1,2-propanediol, 1,4-butanediol, 1,3-butanediol, 1,2-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, and poly-n-propylene glycol. Preferred examples of the poly-n-propylene glycol may include polyethylene glycol, polytrimethylene glycol, polytetramethylene glycol, polypentamethylene glycol, and polyhexamethylene glycol. Furthermore, a commercially available product of the polytrimethylene glycol may be the product name "VELVETOL" manufactured by Allessa.

In the embodiment of the present invention, the monomer constituting the constituent unit (B) represented by the above general formula (2) is more preferably at least one compound selected from the group consisting of 1,5-pentanediol, 1,6-hexanediol, 1,7-heptanediol, 1,8-octanediol, 1,10-decanediol, and 1,12-dodecanediol (C12-diol).

< Constituent unit (C) >

In addition, the polyester carbonate resin of the present invention may further comprise a constituent unit (C) represented by the following general formula (3):

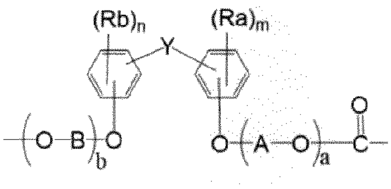

(3)

In the formula (3),

$R_a$ and $R_b$ each independently represent a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, or an aryl group containing 6 to 20 carbon atoms,
Y represents -O-, -S-, -SO-, $-SO_2-$, -CO-, a cycloalkylene group containing 6 to 12 carbon atoms, or a divalent group represented by the following general formula (4) or the following general formula (5), wherein the cycloalkylene group may be optionally substituted with 1 to 12 alkyl groups containing 1 to 3 carbon atoms,
A and B each independently represent an alkylene group containing 1 to 4 carbon atoms,
m and n each independently represent an integer of 0 to 4, and
a and b each independently represent an integer of 1 to 10.

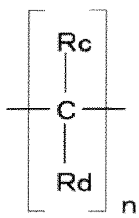

(4)

In the above formula (4),
$R_c$ and $R_d$ are each independently selected from the group consisting of a hydrogen atom, a halogen atom, an alkyl group containing 1 to 20 (preferably 1 to 5) carbon atoms, an alkoxy group containing 1 to 5 (preferably 1 to 3) carbon atoms, an aryl group containing 6 to 12 (preferably 6 to 8) carbon atoms, an aralkyl group containing 7 to 17 (preferably 7 to 10) carbon atoms, and an alkenyl group containing 2 to 15 (preferably 2 to 10) carbon atoms; and are preferably selected from the group consisting of a hydrogen atom, a methyl group, an ethyl group, an isopropyl group, an isobutyl group, and a phenyl group. More preferably, both $R_c$ and $R_d$ represent methyl groups.

The alkyl group, the alkoxy group, the aryl group, the aralkyl group, and the alkenyl group in $R_c$ and $R_d$ may each optionally have a substituent.

$R_c$ and $R_d$ may bind to each other to form a carbon ring containing 3 to 20 (preferably 5 to 15) carbon atoms or a heteroring containing 1 to 20 (preferably 5 to 10) carbon atoms, and the carbon ring and the heteroring may each optionally have a substituent. Preferred examples of the substituent may include a cyclohexyl group, an adamantyl group, a cyclododecane group, and a norbornane group.

In the general formula (4), n represents an integer of 0 to 20, preferably an integer of 0 to 5, and more preferably an integer of 0 to 2.

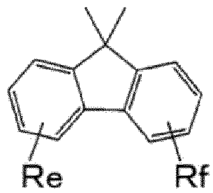
(5)

In the above formula (5),
$R_e$ and $R_f$ are each independently selected from the group consisting of a hydrogen atom, a halogen atom, an alkyl group containing 1 to 20 (preferably 1 to 3) carbon atoms, an alkoxy group containing 1 to 7 (preferably 1 to 3) carbon atoms, an aryl group containing 6 to 12 (preferably 6 to 10) carbon atoms, an aralkyl group containing 7 to 17 (preferably 7 to 11) carbon atoms, and an alkenyl group containing 2 to 15 carbon atoms; and are preferably selected from the group consisting of a hydrogen atom and a phenyl group. More preferably, both $R_e$ and $R\varepsilon$ represent hydrogen atoms.

Besides, the alkyl group, the alkoxy group, the aryl group, the aralkyl group, and the alkenyl group may each optionally have a substituent, and the substituent is preferably a phenyl group.

$R_e$ and $R_1$ may bind to each other to form a carbon ring containing 3 to 20 (preferably 3 to 10) carbon atoms or a heteroring containing 1 to 20 (preferably 1 to 10) carbon atoms, and the carbon ring and the heteroring may each optionally have a substituent.

In a preferred embodiment of the present invention, in the above formula (3), Y represents a divalent group represented by the above general formula (4), or a divalent group represented by the above general formula (5). In addition, in the formula (3), Y is more preferably a fluorene group.

In the present invention, an aspect, in which the monomer constituting the constituent unit (C) represented by the general formula (3) includes at least one of monomers represented by the following structural formulae, is preferable.

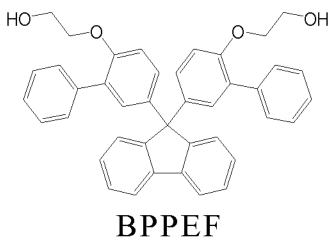
BPPEF

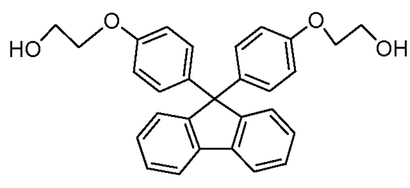
BPEF

< Constituent unit (D) >

Moreover, the polyester carbonate resin of the present invention may further comprise a constituent unit (D) represented by the following general formula (6).

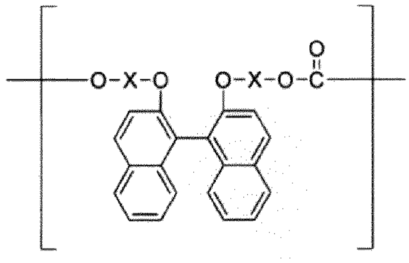

(6)

In the above formula (6), X is an alkylene group containing 1 to 4 carbon atoms.

In the present invention, an aspect, in which the monomer constituting the constituent unit (D) represented by the general formula (6) is a monomer represented by the following structural formula, is preferable.

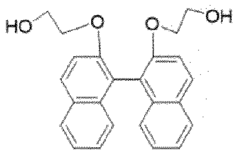

BNE

The polyester carbonate resin of the present invention may comprise, for example, combinations of the compounds shown in the following Table 1.

Table 1]

| No. | Aromatic dihydroxy compounds | | |
|---|---|---|---|
| | Constituent unit (A) | Constituent unit (C) | Constituent unit (D) |
| 1 | Compound represented by formula (1-1) | - | - |
| 2 | Compound represented by formula (1-1) | Compound represented by formula (3-1) | - |
| 3 | Compound represented by formula (1-1) | - | Compound represented by formula (6) |
| 4 | Compound represented by formula (1-1) | Compound represented by formula (3-1) | Compound represented by formula (6) |
| 5 | Compound represented by formula (1-2) | - | - |
| 6 | Compound represented by formula (1-2) | Compound represented by formula (3-1) | - |
| 7 | Compound represented by formula (1-2) | - | Compound represented by formula (6) |
| 8 | Compound represented by formula (1-2) | Compound represented by formula (3-1) | Compound represented by formula (6) |
| 9 | Compound represented by formula (1-1), and compound represented by formula (1-2) | - | - |
| 10 | Compound represented by formula (1-1), and compound represented by formula (1-2) | Compound represented by formula (3-1) | - |
| 11 | Compound represented by formula (1-1), and compound represented by formula (1-2) | - | Compound represented by formula (6) |

(continued)

| No. | Aromatic dihydroxy compounds | | |
|---|---|---|---|
| | Constituent unit (A) | Constituent unit (C) | Constituent unit (D) |
| 12 | Compound represented by formula (1-1), and compound represented by formula (1-2) | Compound represented by formula (3-1) | Compound represented by formula (6) |

Herein, the combinations of the compounds shown in Table 1 will be described. In Table 1, No. 1 to No. 4 indicate that the constituent unit (A) includes a compound in which the X in the formula (1) is a single bond (hereinafter referred to as "formula (1-1)"). No. 5 to No. 8 indicate that the constituent unit (A) includes a compound in which the X in the formula (1) is a fluorene group (hereinafter referred to as "formula (1-2)"). No. 9 to No. 12 indicate that the constituent unit (A) includes the compound represented by the formula (1-1) and the compound represented by the formula (1-2).

Moreover, in Table 1, Nos. 2, 4, 6, 8, 10 and 12 indicate that the constituent unit (C) includes a compound in which the Y in the formula (3) is a fluorene group (hereinafter referred to as "formula (3-1)").

Hereafter, each combination will be described, individually.

<u>No. 1)</u>

In one embodiment of the present invention, the polyester carbonate resin may comprise a constituent unit (A) represented by the following general formula (1-1) and the constituent unit (B) represented by the above general formula (2):

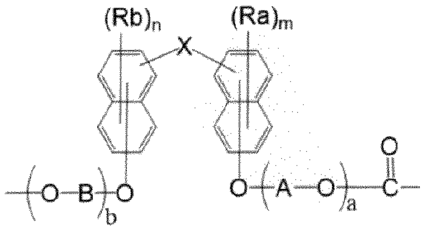

(1−1)

In the formula (1-1),

X represents a single bond,
$R_a$ and $R_b$ are each independently selected from a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms or an aryloxy group containing 6 to 20 carbon atoms, which comprises one or more heterocyclic atoms selected from O, N and S, and $-C{\equiv}C-R_h$,
$R_h$ represents an aryl group containing 6 to 20 carbon atoms, or a heteroaryl group containing 6 to 20 carbon atoms, which comprises one or more heterocyclic atoms selected from O, N and S,
A and B each independently represent an alkylene group containing 1 to 4 carbon atoms,
m and n each independently represent an integer of 1 to 6, and
a and b each independently represent an integer of 0 to 10.

Furthermore, the above general formula (1-1) may also be represented by the following general formula (1-1A).

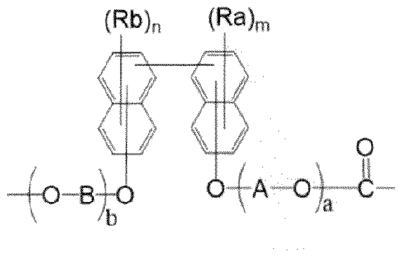

(1−1A)

In the formula (1-1A),

$R_a$ and $R_b$ are each independently selected from a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms or an aryloxy group containing 6 to 20 carbon atoms, which comprises one or more heterocyclic atoms selected from O, N and S, and $-C \equiv C-R_h$,
$R_h$ represents an aryl group containing 6 to 20 carbon atoms, or a heteroaryl group containing 6 to 20 carbon atoms, which comprises one or more heterocyclic atoms selected from O, N and S,
A and B each independently represent an alkylene group containing 1 to 4 carbon atoms,
m and n each independently represent an integer of 1 to 6, and
a and b each independently represent an integer of 0 to 10.

(No. 2)

In one embodiment of the present invention, the polyester carbonate resin may comprise the constituent unit (A) represented by the above general formula (1-1), the constituent unit (B) represented by the above general formula (2), and a constituent unit (C) represented by the following general formula (3-1).

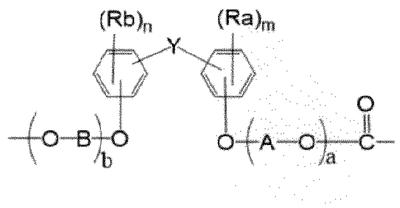

(3−1)

In the above formula (3-1),

$R_a$ and $R_b$ each independently represent a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, or an aryl group containing 6 to 20 carbon atoms,
Y represents a fluorene group,
A and B each independently represent an alkylene group containing 1 to 4 carbon atoms,
m and n each independently represent an integer of 0 to 4, and
a and b each independently represent an integer of 1 to 10.

No. 3)

In one embodiment of the present invention, the polyester carbonate resin may comprise the constituent unit (A) represented by the above general formula (1-1), the constituent unit (B) represented by the above general formula (2), and the constituent unit (D) represented by the above general formula (6).

No. 4)

In one embodiment of the present invention, the polyester carbonate resin may comprise the constituent unit (A) represented by the above general formula (1-1), the constituent unit (B) represented by the above general formula (2), the constituent unit (C) represented by the above general formula (3-1), and the constituent unit (D) represented by the above general formula (6).

No. 5)

In one embodiment of the present invention, the polyester carbonate resin may comprise a constituent unit (A) represented by the following general formula (1-2) and the constituent unit (B) represented by the above general formula (2).

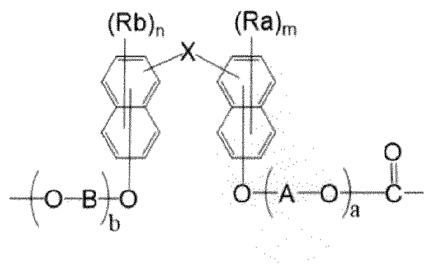

(1-2)

In the above formula (1-2),

X represents a fluorene group,
$R_a$ and $R_b$ are each independently selected from a hydrogen atom, a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms or an aryloxy group containing 6 to 20 carbon atoms, which comprises one or more heterocyclic atoms selected from O, N and S, and $-C \equiv C-R_h$,
$R_h$ represents an aryl group containing 6 to 20 carbon atoms, or a heteroaryl group containing 6 to 20 carbon atoms, which comprises one or more heterocyclic atoms selected from O, N and S,
A and B each independently represent an alkylene group containing 1 to 4 carbon atoms,
m and n each independently represent an integer of 1 to 6, and
a and b each independently represent an integer of 0 to 10.

Further, the above general formula (1-2) may also be represented by the following general formula (1-2A).

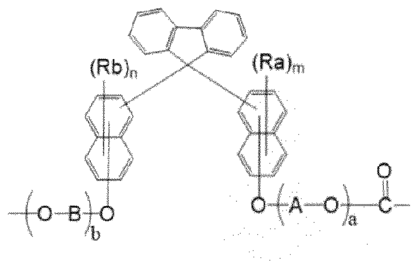

(1-2A)

In the formula (1-2A),

$R_a$ and $R_b$ are each independently selected from a hydrogen atom, a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms or an aryloxy group containing 6 to 20 carbon atoms, which comprises one or more heterocyclic atoms selected from O, N and S, and $-C \equiv C-R_h$,
$R_h$ represents an aryl group containing 6 to 20 carbon atoms, or a heteroaryl group containing 6 to 20 carbon atoms, which comprises one or more heterocyclic atoms selected from O, N and S,
A and B each independently represent an alkylene group containing 1 to 4 carbon atoms,
m and n each independently represent an integer of 1 to 6, and
a and b each independently represent an integer of 0 to 10.

No. 6)

In one embodiment of the present invention, the polyester carbonate resin may comprise the constituent unit (A) represented by the above general formula (1-2), the constituent unit (B) represented by the above general formula (2), and the constituent unit (C) represented by the above general formula (3-1).

(No. 7)

In one embodiment of the present invention, the polyester carbonate resin may comprise the constituent unit

(A) represented by the above general formula (1-2), the constituent unit (B) represented by the above general formula (2), and the constituent unit (D) represented by the above general formula (6).

No. 8)

In one embodiment of the present invention, the polyester carbonate resin may comprise the constituent unit (A) represented by the above general formula (1-2), the constituent unit (B) represented by the above general formula (2), the constituent unit (C) represented by the above general formula (3-1), and the constituent unit (D) represented by the above general formula (6).

No. 9)

In one embodiment of the present invention, the polyester carbonate resin may comprise the constituent units (A) represented by the above general formula (1-1) and the above general formula (1-2), and the constituent unit (B) represented by the above general formula (2).

No. 10)

In one embodiment of the present invention, the polyester carbonate resin may comprise the constituent units (A) represented by the above general formula (1-1) and the above general formula (1-2), the constituent unit (B) represented by the above general formula (2), and the constituent unit (C) represented by the above general formula (3-1).

No. 11)

In one embodiment of the present invention, the polyester carbonate resin may comprise the constituent units (A) represented by the above general formula (1-1) and the above general formula (1-2), the constituent unit (B) represented by the above general formula (2), and the constituent unit (D) represented by the above general formula (6).

No. 12)

In one embodiment of the present invention, the polyester carbonate resin may comprise the constituent units (A) represented by the above general formula (1-1) and the above general formula (1-2), the constituent unit (B) represented by the above general formula (2), the constituent unit (C) represented by the above general formula (3-1), and the constituent unit (D) represented by the above general formula (6).

The molar ratio (A/B) between the constituent unit (A) and the constituent unit (B) is preferably 99.9/0.1 to 0.1/99.9, more preferably 99/1 to 1/99, further preferably 99/1 to 50/50, particularly preferably 99/1 to 60/40, and most preferably 90/10 to 70/30. By setting the molar ratio of the constituent unit (B) to be greater than the above-described lower limit value, the fluidity of the polyester carbonate resin can be improved. On the other hand, by setting the molar ratio of the constituent unit (B) to be smaller than the above-described upper limit value, the optical properties of a molded body produced using the polyester carbonate resin of the present invention can be maintained within a range preferable as an optical material.

< Constituent unit(i) >

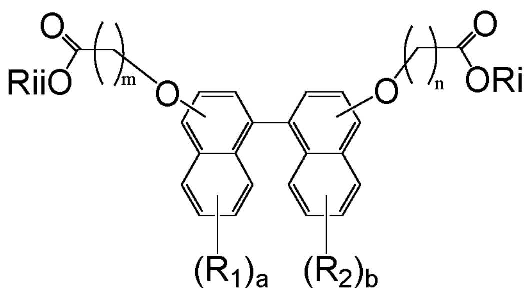

(I)

In the formula (I), $R_1$ and $R_2$ each independently represent a hydrogen atom, a fluorine atom, a chlorine atom,

a bromine atom, an iodine atom, an alkyl group containing 1 to 6 carbon atoms, or an aryl group containing 6 to 20 carbon atoms, which may optionally comprise a heterocyclic atom selected from O, N and S, an alkenyl group containing 2 to 6 carbon atoms, an alkoxy group containing 1 to 6 carbon atoms, or an aralkyl group containing 7 to 17 carbon atoms,

a and b each independently represent an integer of 0 to 5,
n and m each independently represent an integer of 1 to 5, and
$R_i$ and $R_{ii}$ each independently represent a hydrogen atom, or an alkyl group containing 1 to 5 carbon atoms.

In the present invention, an aspect, in which the dicarboxylic acid or the carboxylic acid diester represented by the general formula (I) includes at least either a dicarboxylic acid or a carboxylic acid diester represented by the following structural formulae, is preferable.

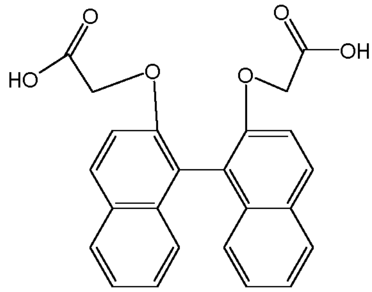

BINOL-DC

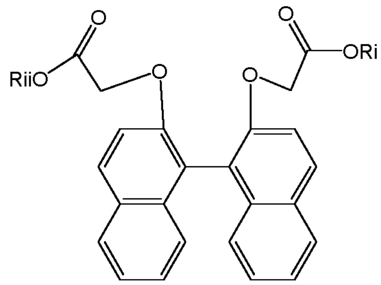

In the above formula, $R_i$ and $R_{ii}$ each independently represent, preferably an alkyl group containing 1 to 5 carbon atoms, more preferably a methyl group or an ethyl group, and particularly preferably a methyl group.

In the present invention, with regard to the molar ratio between the total amount of the diol components constituting the constituent units (A) to (D) and the total amount of the dicarboxylic acid or the carboxylic acid diester constituting the constituent unit (i), the diol components : the carboxylic acid components is preferably 90 : 10 to 10 : 90, more preferably 90 : 10 to 50 : 50, even more preferably 75 : 25 to 50 : 50, further preferably 70 : 30 to 50 : 50, even further preferably 65 : 35 to 50 : 50, and particularly preferably 60 : 40 to 50 : 50. Moreover, the range of 75 : 25 to 40 : 60 or 65 : 35 to 45 : 55 is also preferable.

To the polyester carbonate resin of the present invention, an antioxidant, a mold release agent, an ultraviolet absorber, a fluidity modifier, a crystal nucleating agent, a strengthening agent, a dye, an antistatic agent, an antibacterial agent, or the like is preferably added.

In the polyester carbonate resin of the present invention, phenols generated upon production, or carbonic acid diesters that are not reacted and remain, may be present as impurities. The content of the phenols in the polyester carbonate resin is preferably 0.1 to 3000 ppm, more preferably 0.1 to 2000 ppm, and particularly preferably 1 to 1000 ppm, 1 to 800 ppm, 1 to 500 ppm, or 1 to 300 ppm. In addition, the content of the carbonic acid diesters in the polyester carbonate resin is preferably 0.1 to 1000 ppm, more preferably 0.1 to 500 ppm, and particularly preferably 1 to 100 ppm. By regulating the amounts of the phenols and the carbonic acid diesters contained in the polyester carbonate resin, a resin having physical properties suitable for purposes can be obtained. The contents of the phenols and the carbonic acid diesters can be regulated, as appropriate, by changing conditions or devices for polycondensation. Otherwise, the contents of the phenols and the carbonic acid diesters can also be regulated depending on conditions for an extrusion step performed after the polycondensation.

If the contents of the phenols or the carbonic acid diesters exceed the above-described ranges, problems may appear, such as a decrease in the strength of the obtained resin molded body, or generation of odor. On the other hand, if the contents of the phenols or the carbonic acid diesters are lower than the above-described ranges, plasticity is likely

to decrease when the resin is melted.

Further, there is a case where the raw material monomers remain in the resin. With regard to the amounts of the raw material monomers remaining in the resin, the amount of each raw material monomer is preferably 3000 ppm or less, and more preferably 1 to 1000 ppm.

(B) Method for producing polyester carbonate resin

The polyester carbonate resin of the present invention can be produced according to a melt polycondensation method, using, as raw materials, a diol compound constituting the above-described constituent unit (A), a diol compound constituting the above-described constituent unit (B), a dicarboxylic acid or a carboxylic acid diester constituting the above-described constituent unit (i), and a carbonic acid diester. Furthermore, other diol compounds may be used in combination. In this reaction, the polyester carbonate resin can be produced in the presence of a polycondensation catalyst, namely, in the presence of a basic compound catalyst, a transesterification catalyst, or a mixed catalyst of the basic compound catalyst and the transesterification catalyst.

Examples of the carbonic acid diester may include diphenyl carbonate, ditolyl carbonate, bis(chlorophenyl) carbonate, m-cresyl carbonate, dimethyl carbonate, diethyl carbonate, dibutyl carbonate, and dicyclohexyl carbonate. Among these, diphenyl carbonate is particularly preferable from the viewpoint of reactivity and purity. The additive amount of the carbonic acid diester can be determined by assuming that the diol component reacts with the dicarboxylic acid component in equal moles, and that the remainder reacts with the carbonic acid diester. The carbonic acid diester is used at a ratio of, preferably 0.60 to 1.50 moles, more preferably 0.80 to 1.40 moles, even more preferably 1.00 to 1.30 moles, further preferably 1.00 to 1.25 moles, and particularly preferably 1.00 to 1.20 moles, with respect to 1 mole of the difference between the diol component and the dicarboxylic acid component. The molecular weight of the polyester carbonate resin is regulated by adjusting this molar ratio.

Examples of the basic compound catalyst may include an alkali metal compound, an alkaline-earth metal compound, and a nitrogen-containing compound.

Examples of the alkali metal compound used in the present invention may include the organic acid salts, inorganic salts, oxides, hydroxides, hydrides or alkoxides of alkali metals. From the viewpoints of catalytic effects, costs, distribution amount, the influence on the hue of the resin, etc., sodium carbonate and sodium hydrogen carbonate are preferable.

Examples of the alkaline-earth metal compound may include the organic acid salts, inorganic salts, oxides, hydroxides, hydrides or alkoxides of the alkaline-earth metal compounds.

Examples of the nitrogen-containing compound may include quaternary ammonium hydroxides and the salts thereof, and amines.

As transesterification catalysts, the salts of zinc, tin, zirconium, and lead are preferably used, and these salts can be used alone or in combination thereof. In addition, the transesterification catalyst may also be used in combination with the aforementioned alkali metal compound or alkaline-earth metal compound.

Specific examples of the transesterification catalyst used herein may include tris(2,4-pentanedionato)aluminum(III), diethyl (4-methylbenzyl)phosphonate, zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonate , zirconium oxyacetate, zirconium tetrabutoxide, lead(II) acetate, lead(IV) acetate, zirconium acetate, and titanium tetrabutoxide. Among others, zinc acetate, zirconium acetate, tris(2,4-pentanedionato)aluminum(III), and diethyl (4-methylbenzyl)phosphonate are preferable; and tris(2,4-pentanedionato)aluminum(III) and diethyl (4-methylbenzyl)phosphonate are more preferable.

Such a catalyst is used, so that the metal component in the catalyst becomes preferably 0.001 ppm to 1000 ppm, more preferably 0.01 ppm to 100 ppm, and particularly preferably 0.1 ppm to 100 ppm, with respect to the amount of a theoretically generated resin. It is to be noted that, in the aforementioned Examples, the catalyst was added so that the Al element became 6.5 ppm and the P element became 13.5 ppm.

In the melt polycondensation method, the above-described raw materials or catalysts are used, and melt polycondensation is carried out under heating under ordinary pressure or reduced pressure, while removing by-products according a transesterification reaction.

Specifically, the reaction is carried out at a temperature of 120°C to 260°C, preferably of 180°C to 260°C, for 0.1 to 5 hours, preferably for 0.5 to 3 hours. Subsequently, the reaction temperature is increased while the degree of pressure reduction in the reaction system is increased, so that the reaction of a diol compound with a carbonic acid diester is carried out, and finally, the polycondensation reaction is carried out under a reduced pressure of 1 mmHg or less at a temperature of 200°C to 350°C for 0.05 to 2 hours. Such a reaction may be carried out either in a continuous system or in a batch system. The reaction apparatus used to perform the above-described reaction may be a vertical reaction apparatus equipped with an anchor-type impeller, a max-blend impeller, a helical ribbon-type impeller, etc., or a horizontal reaction apparatus equipped with paddle blades, lattice blades, glasses blades, etc., or further, an extruder-type reaction apparatus equipped with a screw, etc. Moreover, a reaction apparatus prepared by appropriately combining the aforementioned reaction apparatuses with one another, while considering the viscosity of a polymer, is preferably used.

In the method for producing the polyester carbonate resin of the present invention, after completion of the polymerization reaction, in order to maintain heat stability and hydrolytic stability, the catalyst may be removed or deactivated. In general, a method of deactivating a catalyst by addition of a known acidic substance is preferably applied. Specific examples of these acidic substances that are preferably used herein may include: esters such as butyl benzoate; aromatic sulfonic acids such as p-toluenesulfonic acid; aromatic sulfonic acid esters, such as butyl p-toluenesulfonate and hexyl p-toluenesulfonate; phosphoric acids, such as phosphorous acid, phosphoric acid, and phosphonic acid; phosphorous acid esters, such as triphenyl phosphite, monophenyl phosphite, diphenyl phosphite, diethyl phosphite, di-n-propyl phosphite, di-n-butyl phosphite, di-n-hexyl phosphite, dioctyl phosphite, and monooctyl phosphite; phosphoric acid esters, such as triphenyl phosphate, diphenyl phosphate, monophenyl phosphate, dibutyl phosphate, dioctyl phosphate, and monooctyl phosphate; phosphonic acids, such as diphenyl phosphonate, dioctyl phosphonate, and dibutyl phosphonate; phosphonic acid esters such as diethyl phenyl phosphonate; phosphines, such as triphenylphosphine and bis(diphenylphosphino)ethane; boric acids, such as boric acid and phenyl borate; aromatic sulfonates, such as tetrabutylphosphonium dodecylbenzenesulfonate; organic halides, such as chloride stearate, benzoyl chloride, and p-toluenesulfonyl chloride; alkyl sulfates such as dimethyl sulfonate; and organic halogenates such as benzyl chloride. From the viewpoints of deactivating effects, and the hue and stability of the resin, aromatic sulfonates such as tetrabutylphosphonium dodecylbenzene sulfonate are preferably used. Such a deactivating agent is used in an amount of 0.01 to 50 times moles, and preferably 0.3 to 20 times moles, with respect to the amount of the catalyst. If the amount of the deactivating agent is smaller than 0.01 time mole with respect to the amount of the catalyst, deactivating effects unfavorably become insufficient. On the other hand, if the amount of the deactivating agent is larger than 50 times moles with respect to the amount of the catalyst, it is unfavorable that heat resistance is decreased and the molded body is easily colored.

After deactivation of the catalyst, a step of removing a low-boiling-point compound from the polymer by devolatilization at a pressure of 0.1 to 1 mmHg and at a temperature of 200°C to 350°C may be established. For this step, a horizontal apparatus equipped with stirring blades having excellent surface renewal ability, such as paddle blades, lattice blades or glasses blades, or a thin film evaporator is preferably used.

The polyester carbonate resin of the present invention is desired to contain a foreign matter in an amount as small as possible, and thus, filtration of melted raw materials and filtration of a catalyst solution are preferably carried out. The thickness of a filter mesh is preferably 5 μm or less, and more preferably 1 μm or less. Moreover, filtration of the generated resin through a polymer filter is preferably carried out. The thickness of the polymer filter mesh is preferably 100 μm or less, and more preferably 30 μm or less. Furthermore, a step of collecting resin pellets must be naturally performed under a low-dust environment, and the class is preferably 1000 or less, and more preferably 100 or less.

(C) Physical properties of polyester carbonate resin

The polyester carbonate resin of the present invention is excellent in terms of at least one of refractive index, Abbe number, glass transition temperature, dispersion degree, and melt volume-flow rate.

The polystyrene-converted weight average molecular weight (Mw) of the polyester carbonate resin of the present invention is preferably 5,000 to 300,000. The polystyrene-converted weight average molecular weight (Mw) of the present polyester carbonate resin is more preferably 20,000 to 120,000, and particularly preferably 20,000 to 60,000. If Mw is smaller than 5,000, the optical lens unfavorably becomes brittle. In contrast, if Mw is larger than 300,000, melt viscosity becomes high, and thereby it becomes difficult to extract the resin after the production thereof. Further, fluidity becomes deteriorated, so that unfavorably, injection molding is hardly performed in the melted state.

The polyester carbonate resin of the present invention has a glass transition point (Tg) of preferably 145°C to 1610°C, and more preferably 147°C to 158°C.

A molded body produced from the polyester carbonate resin of the present invention has a refractive index of preferably 1.693 to 1.710, and more preferably 1.695 to 1.705.

A molded body produced from the polyester carbonate resin of the present invention has an Abbe number of preferably 24 or less, more preferably 23 or less, and particularly preferably 22 or less. The lower limit of the Abbe number is not particularly limited, and when the molded body is used as an optical lens, the Abbe number is preferably 13 or more, and more preferably 15 or more, if taking into consideration the specifications for use.

The polyester carbonate resin of the present invention has a dispersion degree (Mw/Mn) of preferably 2.0 to 8.0, and more preferably 3.0 to 7.6.

The polyester carbonate resin of the present invention has a melt volume-flow rate (MVR) of preferably 9.0 $cm^3$/10 min or more, more preferably 15 $cm^3$/10 min or more, and further preferably 22 $cm^3$/10 min or more. The upper limit of MVR is not particularly limited, and from the viewpoint of moldability, the upper limit of MVR is preferably 100

$cm^3$/10 min or less, more preferably 70 $cm^3$/10 min or less, and further preferably 60 $cm^3$/10 min or less.

(D) Optical lens

Since the optical lens produced using the polyester carbonate resin of the present invention has a high refractive index and excellent heat resistance, it can be used in the field in which expensive high-refractive-index glass lenses have been conventionally used, such as telescopes, binoculars and TV projectors, and thus, the present optical lens is extremely useful. The present optical lens is preferably used in the shape of an aspherical lens, as necessary. Since the aspherical lens can reduce spherical aberration to substantially zero with a single lens thereof, it is not necessary to eliminate the spherical aberration by a combination of a plurality of spherical lenses, and thereby, it becomes possible to achieve weight saving and a reduction in production costs. Therefore, among the optical lenses, the aspherical lens is particularly useful as a camera lens.

Further, the optical lens is molded by any given method, such as, for example, an injection molding method, a compression molding method or an injection compression molding method. According to the present invention, a high-refractive-index, low-birefringence aspheric lens, which is a glass lens that is technically difficult to be processed, can be more easily obtained.

In order to avoid the mixing of foreign matters into the optical lens as much as possible, the molding environment must be naturally a low-dust environment, and the class is preferably 6 or less, and more preferably 5 or less.

(E) Optical film

Since the optical film produced using the polyester carbonate resin of the present invention is excellent in terms of transparency and heat resistance, it can be preferably used for films for use in liquid crystal substrates, optical memory cards, etc.

In order to avoid the mixing of foreign matters into the optical film as much as possible, the molding environment must be naturally a low-dust environment, and the class is preferably 6 or less, and more preferably 5 or less.

Examples

Hereinafter, the present invention will be described in the following examples. However, the present invention is not limited at all by these examples. Besides, the measured values in the Examples were measured using the following methods or devices.

1) Refractive index (nD)

A polyester carbonate resin composition was molded according to JIS B 7071-2: 2018, to obtain a V block, which was then used as a test piece. The refractive index was measured at 23°C using a refractometer (KPR-3000, manufactured by Shimadzu Corporation).

2) Abbe number (ν)

The same test piece (V block) as that used in the measurement of a refractive index was used, and the refractive indexes at wavelengths of 486 nm, 589 nm, and 656 nm were measured at 23°C using a refractometer. Thereafter, the Abbe number was calculated according to the following equation:

$$\nu = (nD-1)/(nF-nC),$$

wherein

nD: refractive index at a wavelength of 589 nm,
nC: refractive index at a wavelength of 656 nm, and
nF: refractive index at a wavelength of 486 nm.

3) Glass transition temperature (Tg)

The glass transition temperature (Tg) was measured according to JIS K7121-1987, using a differential scanning calorimeter by a temperature-increasing program of 10°C/min.

Differential scanning calorimeter: X-DSC7000, manufactured by Hitachi High-Tech Science Corporation

4) Dispersion degree (Mw/Mn)

The dispersion degree (Mw/Mn) was calculated from the weight average molecular weight (Mw) and the number average molecular weight (Mn), which were in terms of standard polystyrene, according to gel permeation chromatography (GPC). The used apparatus, columns and measurement conditions are as follows.

- GPC apparatus: HLC-8420GPC, manufactured by Tosoh Corporation
- Columns: TSKgel SuperHM-M x 3, manufactured by Tosoh Corporation

    TSKgel guard column SuperH-H x 1, manufactured by Tosoh Corporation
    TSKgel SuperH-RC x 1, manufactured by Tosoh Corporation

- Detector: RI Detector
- Standard polystyrene: Standard Polystyrene Kit PStQuick C, manufactured by Tosoh Corporation
- Sample solution: 0.2 mass % Tetrahydrofuran solution
- Eluent: Tetrahydrofuran
- Eluent flow rate: 0.6 mL/min
- Column temperature: 40°C

5) Melt volume-flow rate (MVR)

The melt volume-flow rate (MVR) was measured according to JIS K7210.

Measurement apparatus: Melt Indexer T-111, manufactured by TOYO SEIKI SEISAKU-SHO, LTD.
Measurement conditions: MVR was measured at a temperature of 260°C under a load of 2160 g.
Operations: MVR (unit: $cm^3$/10 minutes) was calculated from the amount of a resin extruded per 10 minutes from the standard die installed at the bottom of the cylinder.

(Example 1)

Raw materials, namely, 7500.0 g (12.0 mol) of 6,6'-di-(2-naphthyl)-2,2'-bis-(2-hydroxyethoxy)-1,1'-binaphthyl (2DNBINOL-2EO) represented by the structural formula as shown below, 4958.2 g (9.2 mol) of 9,9-bis[6-(2-hydroxyethoxy)-2-naphthyl]fluorene (BNEF) represented by the structural formula as shown below, 838.1 g (4.1 mol) of 1,12-dodecanediol (C12-diol) represented by the structural formula as shown below, 8334.2 g (20.7 mol) of 2,2'-([1,1'-binaphthalene]-2,2'-diylbis(oxy))acetoacetic acid (BINOL-DC) represented by the structural formula as shown below, and 1167.4 g (5.4 mol) of diphenyl carbonate (DPC) and further, 1.68 g of tris(2,4-pentanedionato)aluminum(III) and 2.1 mL of diethyl (4-methylbenzyl)phosphonate, which served as catalysts, were placed in a 50-L reactor equipped with a stirrer and a distillation apparatus, followed by nitrogen substitution.

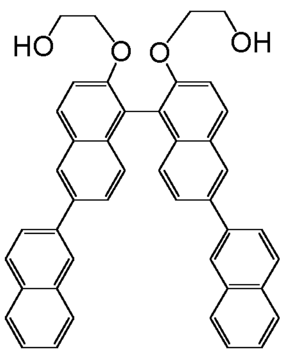

2DNBINOL-2EO

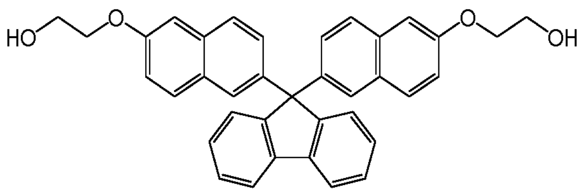

BNEF

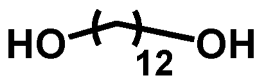

C12-diol

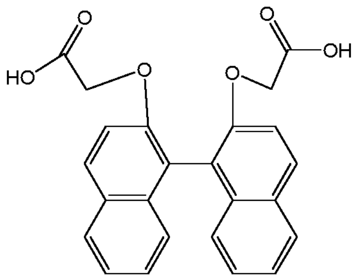

BINOL-DC

The reaction mixture was heated to 200°C over 20 minutes in a nitrogen atmosphere under a pressure of 760 Torr, and was stirred. The pressure reduction degree was adjusted to 300 Torr over 20 minutes, and the temperature was then increased to 240°C over 40 minutes. The reaction mixture was then retained under conditions of 240°C and 300 Torr for 10 minutes, so as to carry out a transesterification reaction. The pressure was returned to normal pressure with nitrogen gas, and the trap was exchanged with a new one. Thereafter, the conditions were adjusted again to 240°C and 300 Torr, and the reaction mixture was then retained for 10 minutes. Thereafter, while the temperature was increased to 250°C over 70 minutes, the pressure reduction degree was adjusted to 50 Torr over 50 minutes. Thereafter, the pressure reduction degree was further adjusted to 1 Torr over 20 minutes, and a polymerization reaction was then carried out under stirring under conditions of 250°C and 1 Torr or less for 30 minutes. After completion of the reaction, nitrogen was introduced into the reaction system in the reactor for pressurization, and the generated polyester carbonate resin was extracted while pelletizing, so as to obtain a polyester carbonate resin.

Furthermore, 3,9-bis(2,6-di-tert-butyl-4-methylphenoxy)-2,4,8,10-tetraoxa-3,9-diphosphaspiro[5.5]undecane (ADK STAB PEP-36; manufactured by ADEKA) was added to the polyester carbonate resin to 300 ppm; pentaerythol tetrakis[3-(3,5-di-tert-butyl-4-hydroxyphenyl)propionate] (ADK STAB AO-60; manufactured by ADEKA) was added to the polyester carbonate resin to 1000 ppm; glycerin monostearate (monoglyceride stearate, RIKEMAL S-100A; manufactured by RIKEN VITAMIN CO., LTD.) was added to the polyester carbonate resin to 1500 ppm; tetrabutylphosphonium dodecylbenzene sulfonate (MGA-614; manufactured by TAKEMOTO OIL & FAT CO., LTD.) was added to polyester carbonate resin to 15 ppm; and the following mixture, namely, a mixture of a 3,4-dimethyl body and a 2,4-dimethyl body (90 : 10) (manufactured by Tokyo Chemical Industry Co., Ltd.) was added to the polyester carbonate resin to 200 ppm. Thereafter, the obtained mixture was kneaded using a biaxial extruder.

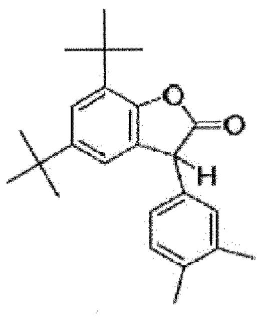

90%

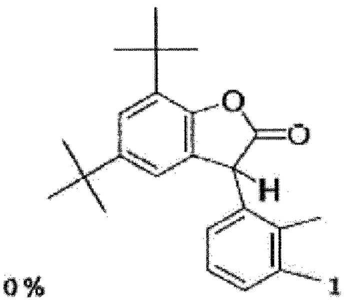

10%

Details of the extrusion are as follows.

Biaxial extruder: TEM-18SS, manufactured by SHIBAURA MACHINE CO., LTD.
Resin temperature: 260°C
Screw rotation number: 200 rpm
The physical properties of the obtained polyester carbonate resin are shown in the following Table 2.

(Examples 2 and 3 and Comparative Examples 1 to 3)

Individual polyester carbonate resins were obtained in the same manner as that of Example 1 with the exception that the types of raw materials and the addition ratios were changed to obtain the compositions shown in the following Table 2.

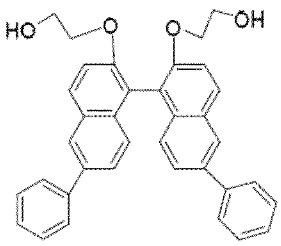

DPBHBNA

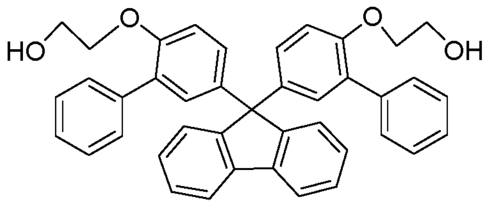

BPPEF

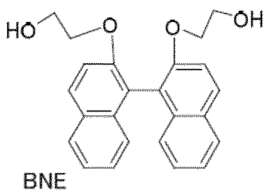

BNE

The physical properties of the obtained polyester carbonate resins are shown in the following Table 2.

[Table 2]

| | | | | Ex. 1 | Ex. 2 | Ex. 3 | Comp.Ex. 1 | Comp.Ex. 2 | Comp.Ex. 3 |
|---|---|---|---|---|---|---|---|---|---|
| Raw materials | Diol | Formula (1): Constituent unit (A) | 2DNBINOL-2EO (mol%) | 26 | 17 | 25.5 | 0 | 0 | 0 |
| | | | DPBHBNA (mol%) | 0 | 0 | 0 | 55 | 0 | 0 |
| | | | BNEF (mol%) | 20 | 31 | 0 | 15 | 55 | 0 |
| | | Formula (2): Constituent unit (B) | C12-diol (mol%) | 9 | 7 | 3.5 | 0 | 0 | 55 |
| | | Formula (3): Constituent unit (C) | BPPEF (mol%) | 0 | 0 | 26 | 0 | 0 | 0 |
| | | Formula (6): Constituent unit (D) | BNE (mol%) | 0 | 0 | 0 | 10 | 0 | 0 |
| | Dicarboxylic acid or carboxylic acid diester | Formula (I): Constituent unit (i) | BINOL-DC (mol%) | 45 | 45 | 45 | 20 | 45 | 45 |
| | DPC/(Diol-dicarboxylic acid or carboxylic acid diester) | | (Molar ratio) | 1.194 | 1.184 | 1.184 | 1.184 | 1.184 | 1.184 |
| | Physical properties | | Tg (°C) | 148 | 155 | 152 | 162 | 177 | 25 |
| | | | Refractive index (nD) | 1.702 | 1.696 | 1.696 | 1.692 | 1.688 | 1.616 |
| | | | Abbe number (νd) | 16.0 | 16.8 | 16.5 | 16.7 | 18.3 | 27.6 |
| | | | Molecular weight (Mw) | 36275 | 25095 | 42487 | 35230 | 37256 | 17409 |
| | | | Molecular weight (Mn) | 5346 | 6391 | 5739 | 3355 | 5408 | 4576 |
| | | | Dispersion degree (Mw/Mn) | 6.8 | 3.9 | 7.4 | 10.5 | 6.9 | 3.8 |
| | | | MVR ($cm^3$/10 min) | 30.3 | 22.2 | 52.7 | 8.0 | 3.0 | Unmeasurable |

## Claims

1. A polyester carbonate resin which comprises a constituent unit (A) represented by the following general formula (1), a constituent unit (B) represented by the following general formula (2), and a constituent unit (i) derived from a dicarboxylic acid or a carboxylic acid diester represented by the following general formula (I):

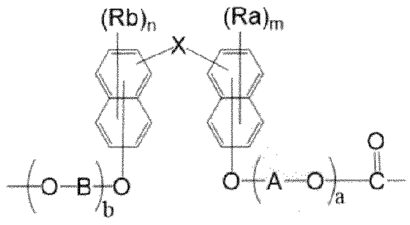 (1)

wherein

X represents a single bond or a fluorene group,
when X is a single bond, $R_a$ and $R_b$ are each independently selected from a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms or an aryloxy group containing 6 to 20 carbon atoms, which comprises one or more heterocyclic atoms selected from O, N and S, and $-C \equiv C-R_h$,
when X is a fluorene group, $R_a$ and $R_b$ are each independently selected from a hydrogen atom, a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, an aryl group containing 6 to 20 carbon atoms, a heteroaryl group containing 6 to 20 carbon atoms or an aryloxy group containing 6 to 20 carbon atoms, which comprises one or more heterocyclic atoms selected from O, N and S, and $-C \equiv C-R_h$,
$R_h$ represents an aryl group containing 6 to 20 carbon atoms, or a heteroaryl group containing 6 to 20 carbon atoms, which comprises one or more heterocyclic atoms selected from O, N and S,
A and B each independently represent an alkylene group containing 1 to 4 carbon atoms,
m and n each independently represent an integer of 1 to 6, and
a and b each independently represent an integer of 0 to 10,

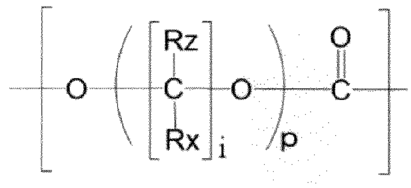 (2)

wherein

$R_z$ and $R_x$ each independently represent a hydrogen atom, or an alkyl group containing 1 to 3 carbon atoms, i represents an integer of 2 to 16, and p represents an integer of 1 to 600, and

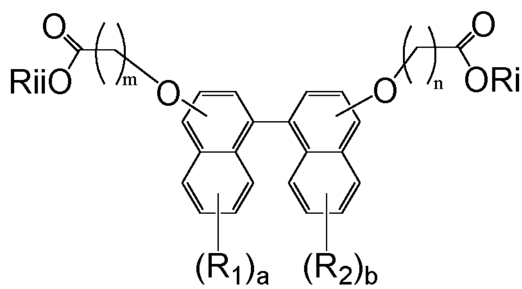 (I)

wherein

$R_1$ and $R_2$ each independently represent a hydrogen atom, a fluorine atom, a chlorine atom, a bromine atom, an iodine atom, an alkyl group containing 1 to 6 carbon atoms, or an aryl group containing 6 to 20 carbon atoms, which optionally comprises a heterocyclic atom selected from O, N and S, an alkenyl

group containing 2 to 6 carbon atoms, an alkoxy group containing 1 to 6 carbon atoms, or an aralkyl group containing 7 to 17 carbon atoms,
a and b each independently represent an integer of 0 to 5,
n and m each independently represent an integer of 1 to 5, and
$R_i$ and $R_{ii}$ each independently represent a hydrogen atom, or an alkyl group containing 1 to 5 carbon atoms.

**2.** The polyester carbonate resin according to claim 1, wherein a molar ratio (A/B) between the constituent unit (A) and the constituent unit (B) is 99.9/0.1 to 0.1/99.9.

**3.** The polyester carbonate resin according to claim 1 or 2, wherein i in the general formula (2) is an integer of 2 to 10, and p in the general formula (2) is 1 to 3.

**4.** The polyester carbonate resin according to any one of claims 1 to 3, which further comprises a constituent unit (C) represented by the following general formula (3):

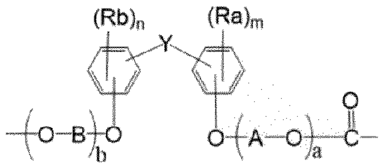

(3)

wherein

$R_a$ and $R_b$ each independently represent a halogen atom, an alkyl group containing 1 to 20 carbon atoms, an alkoxyl group containing 1 to 20 carbon atoms, a cycloalkyl group containing 5 to 20 carbon atoms, a cycloalkoxyl group containing 5 to 20 carbon atoms, or an aryl group containing 6 to 20 carbon atoms,
Y represents -O-, -S-, -SO-, -$SO_2$-, -CO-, a cycloalkylene group containing 6 to 12 carbon atoms, or a divalent group represented by the following general formula (4) or the following general formula (5), wherein the cycloalkylene group may be optionally substituted with 1 to 12 alkyl groups containing 1 to 3 carbon atoms,
A and B each independently represent an alkylene group containing 1 to 4 carbon atoms,
m and n each independently represent an integer of 0 to 4, and
a and b each independently represent an integer of 1 to 10,

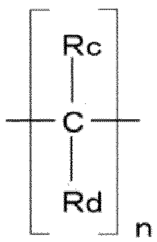

(4)

wherein

$R_c$ and $R_d$ are each independently selected from the group consisting of a hydrogen atom, a halogen atom, an alkyl group containing 1 to 20 carbon atoms, an alkoxy group containing 1 to 5 carbon atoms, an aryl group containing 6 to 12 carbon atoms, an aralkyl group containing 7 to 17 carbon atoms, and an alkenyl group containing 2 to 15 carbon atoms,
wherein the alkyl group, the alkoxy group, the aryl group, the aralkyl group, and the alkenyl group in $R_c$ and $R_d$ may each optionally have a substituent, and $R_c$ and $R_d$ may bind to each other to form a carbon ring containing 3 to 20 carbon atoms or a heteroring containing 1 to 20 carbon atoms, the carbon ring and the heteroring may each optionally have a substituent, and n represents an integer of 0 to 20,

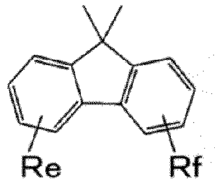

(5)

wherein

$R_e$ and $R_f$ are each independently selected from the group consisting of a hydrogen atom, a halogen atom, an alkyl group containing 1 to 20 carbon atoms, an alkoxy group containing 1 to 7 carbon atoms, an aryl group containing 6 to 12 carbon atoms, an aralkyl group containing 7 to 17 carbon atoms, and an alkenyl group containing 2 to 15 carbon atoms, wherein the alkyl group, the alkoxy group, the aryl group, the aralkyl group, and the alkenyl group may each optionally have a substituent, and

$R_e$ and $R_f$ may bind to each other to form a carbon ring containing 3 to 20 carbon atoms or a heteroring containing 1 to 20 carbon atoms, and the carbon ring and the heteroring may each optionally have a substituent.

**5.** The polyester carbonate resin according to claim 4, wherein Y in the general formula (3) is a fluorene group.

**6.** The polyester carbonate resin according to any one of claims 1 to 5, which further comprises a constituent unit (D) represented by the following general formula (6):

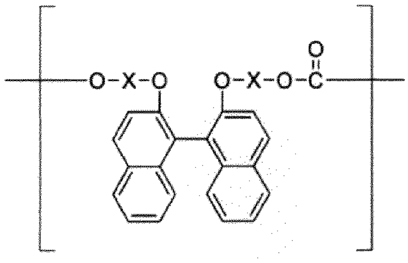

(6)

wherein X represents an alkylene group containing 1 to 4 carbon atoms.

**7.** The polyester carbonate resin according to any one of claims 1 to 6, wherein a monomer constituting the constituent unit (A) represented by the general formula (1) comprises at least one of monomers represented by the following structural formulae:

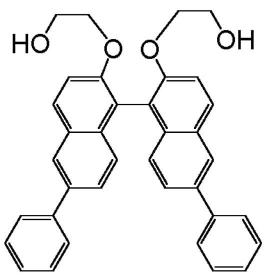

DPBHBNA

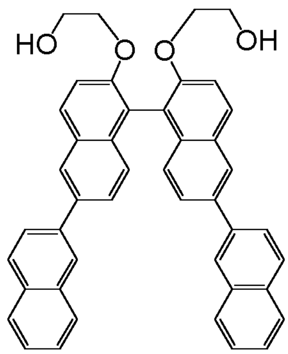

2DNBINOL-2EO

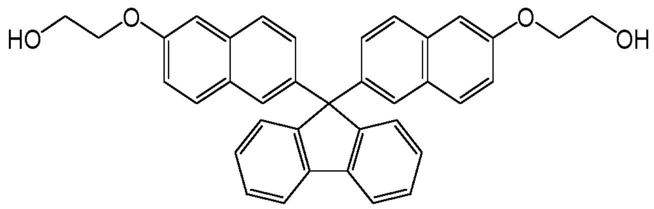

BNEF

8. The polyester carbonate resin according to any one of claims 1 to 7, wherein a monomer constituting the constituent unit (B) represented by the general formula (2) is at least one compound selected from the group consisting of 1,5-pentanediol, 1,6-hexanediol, 1,7-heptanediol, 1,8-octanediol, 1,10-decanediol, and 1,12-dodecanediol (C12-diol).

9. The polyester carbonate resin according to any one of claims 1 to 8, wherein the dicarboxylic acid or the carboxylic acid diester represented by the general formula (I) comprises at least either a dicarboxylic acid or a carboxylic acid diester represented by the following structural formulae:

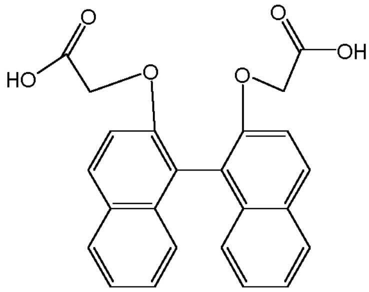

BINOL-DC

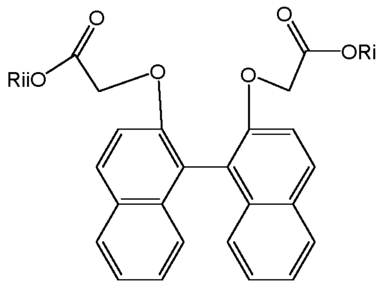

wherein $R_i$ and $R_{ii}$ each independently represent an alkyl group containing 1 to 5 carbon atoms.

10. The polyester carbonate resin according to claim 4 or 5, wherein a monomer constituting the constituent unit (C) represented by the general formula (3) comprises at least one of monomers represented by the following structural formulae:

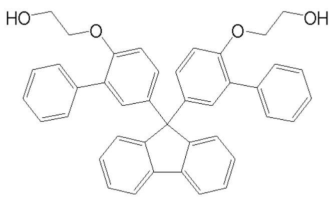

BPPEF

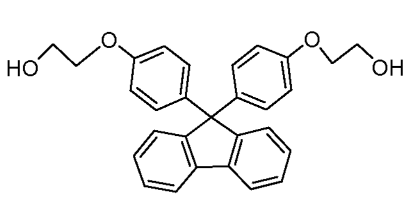

BPEF

11. The polyester carbonate resin according to claim 6, wherein a monomer constituting the constituent unit (D) represented by the general formula (6) is a monomer represented by the following structural formula:

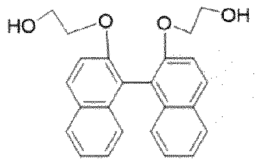

BNE

12. The polyester carbonate resin according to any one of claims 1 to 11, which has a refractive index (nD) of 1.693 to 1.710.

13. The polyester carbonate resin according to any one of claims 1 to 12, which has Tg of 145°C to 161°C.

14. The polyester carbonate resin according to any one of claims 1 to 13, which has a dispersion degree (Mw/Mn) of 2.0 to 8.0.

15. The polyester carbonate resin according to any one of claims 1 to 14, which has a melt volume-flow rate ($cm^3$/10 min) of 9.0 to 100.

16. An optical lens, comprising the polyester carbonate resin according to any one of claims 1 to 15.

17. An optical film, comprising the polyester carbonate resin according to any one of claims 1 to 15.

## INTERNATIONAL SEARCH REPORT

International application No.
**PCT/JP2022/041832**

**A. CLASSIFICATION OF SUBJECT MATTER**

***C08G 63/64***(2006.01)i; ***G02B 1/04***(2006.01)i
FI: C08G63/64; G02B1/04

According to International Patent Classification (IPC) or to both national classification and IPC

**B. FIELDS SEARCHED**

Minimum documentation searched (classification system followed by classification symbols)

C08G63/64; G02B1/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2021/014962 A1 (TEIJIN LIMITED) 28 January 2021 (2021-01-28)<br>tables 1, 3, examples 1-2, 4, 11-16, 18, comparative examples 1-2, 4, 9-11, etc. | 1-7, 9-17<br>8 |
| X<br>A | WO 2019/176874 A1 (TEIJIN LIMITED) 19 September 2019 (2019-09-19)<br>table 1, examples 4-7, etc. | 1-3, 6-7, 9, 11, 13-17<br>4-5, 8, 10, 12 |
| X<br>A | WO 2019/131841 A1 (TEIJIN LIMITED) 04 July 2019 (2019-07-04)<br>table 1, example 7, etc. | 1-3, 7, 9, 11, 13-17<br>4-6, 8, 10, 12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/041832**

| Patent document cited in search report | Publication date (day/month/year) | Patent family member(s) | Publication date (day/month/year) |
|---|---|---|---|
| WO 2021/014962 A1 | 28 January 2021 | CN 114375313 A | |
| WO 2019/176874 A1 | 19 September 2019 | US 2021/0002420 A1<br>table 1, examples 4-7, etc.<br>EP 3766913 A1<br>KR 10-2020-0088490 A<br>CN 111655754 A | |
| WO 2019/131841 A1 | 04 July 2019 | US 2021/0371650 A1<br>table 1, example 7, etc.<br>EP 3733734 A1<br>KR 10-2020-0067893 A<br>CN 111527125 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 201473496 A
- JP H570584 A
- JP H269520 A
- JP H5341124 A